# EUROPEAN PATENT SPECIFICATION

(11) **EP 1 911 192 B1**
(45) Date of publication and mention of the grant of the patent: **23.05.2012**
(21) Application number: 06761214.3
(22) Date of filing: 01.08.2006
(51) Int. Cl.: H04L 29/08, H04L 29/06, H04L 29/00

(54) **SUSPENSION AND RESUMPTION OF SECURE DATA CONNECTION SESSION**
SUSPENDIERUNG UND WIEDERAUFNAHME EINER SICHEREN DATENVERBINDUNGSSITZUNG
INTERRUPTION ET REPRISE DE SESSION DE CONNEXION A DES DONNEES SECURISEES

(30) Priority: 05.08.2005 US 198921
(43) Date of publication of application: 16.04.2008
(73) Proprietor: SIERRA WIRELESS, INC., Richmond, British Columbia V6V 3A4 (CA)
(72) Inventor: TOSEY, Joseph, Peter, Robert, North Vancouver, British Columbia V7R 1C9 (CA); WAUNG, William, Burnaby, British Columbia V5A 3Z6 (CA)
(74) Representative: Ilgart, Jean-Christophe
(86) International application number: PCT/CA2006/001279
(87) International publication number: WO 2007/016768

(56) References cited:
- EP-A1- 1 168 718
- WO-A1-2004/012472
- CA-A1- 2 492 762
- US-A1- 2002 097 724
- US-A1- 2004 225 895
- US-A1- 2005 039 048
- US-A1- 2005 059 379
- US-A1- 2005 163 078
- US-B1- 6 449 272
- T. W. Shinder: "Remote Access VPN and a Twist on the Dangers of Split Tunneling", , 10 May 2005 (2005-05-10), pages 1-6, XP002627712, Retrieved from the Internet: URL:http://www.isaserver.org/tutorials/200 4fixipsectunnel.html [retrieved on 2011-03-10]

## Description

### FIELD OF THE INVENTION

The present invention relates to the field of computer networking. More specifically, the present invention relates to the suspension and resumption of a secure data connection session in a computer network.

### BACKGROUND OF THE INVENTION

In the field of computer networking, virtual private networks (VPNs) have grown quite popular with enterprises wishing to provide secure access to a private network. VPN is a wide area network that connects private subscribers (for example, employees of the same company) together using the public Internet as the transport medium, while ensuring that their traffic is not readable by the Internet at large. All the data is encrypted to prevent others from reading it, and authentication measures ensure that only messages from authorized VPN users can be received.

The data encryption is handled through the exchange of keys upon negotiation of a virtual private network link, also known as a tunnel. The generation of keys, however, is time consuming, interrupts user processes, and is generally processor-hungry. It is therefore beneficial to reduce the number of times keys will have to be generated.

Another problem with current VPN solutions is that, upon gaining access to a secure private network, the user is now exclusively blocked from accessing other networks. For instance, a user cannot access a Multimedia Messaging Service (MMS) gateway that is behind their carrier or Internet Service Provider's network, or access the Internet. In order for a user to access such networks, he must shut down the VPN tunnel, then later bring it back up once he is finished accessing the other networks. Additionally, if the user device is a handheld computer, the tunnel has to be brought down if another IP address is brought up, for instance, the device is cradled. This causes a need to re-negotiate the keys, and thus runs into the aforementioned problems involved with the generation of keys.

The result of this is that VPN sessions, which should be good for up to 18 hours, often need to be torn down after just 15 minutes. This adds additional burden to the processors in the network as well as to network bandwidth, as keys must be renegotiated and secure token codes re-entered each time the VPN session is reactivated.

In the past, this problem has been solved using split-tunneling, where multiple tunnels are kept open simultaneously. However, this creates fairly dramatic problems with Domain Name Service (DNS) lookups, as the device often will not know which tunnel to use for the lookup, and can cause ambiguous IP addresses to be simultaneously present.

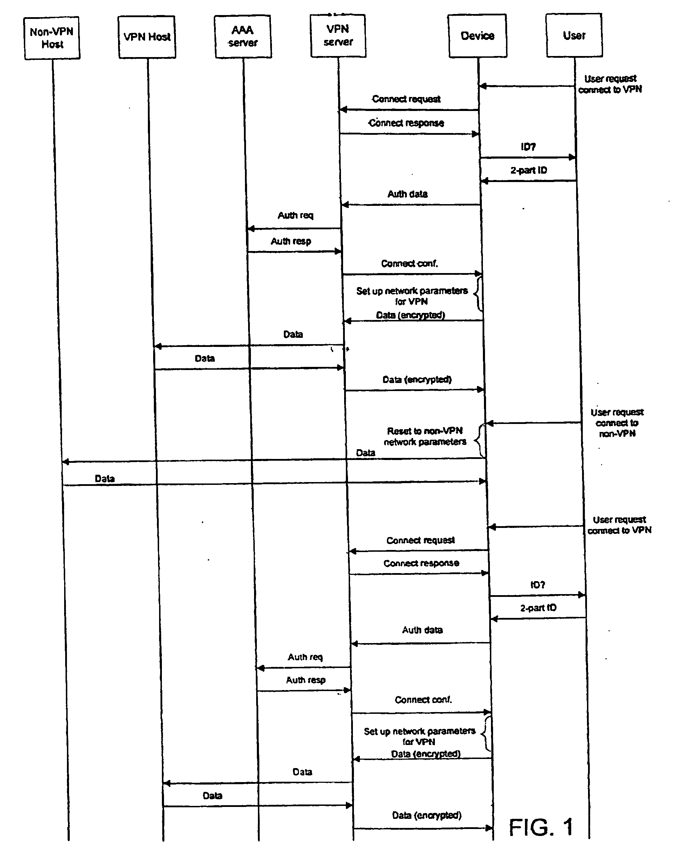

FIG. 1 is a timing diagram illustrating the typical scenario where the user requests a connection to a VPN. On receipt of such a request, the VPN server obtains authentication information from the user and checks these against its Authentication, Authorization and Accounting (AAA) server. Once the user's credentials have been validated, the secure tunnel is established and the user's device sends and receives encrypted data with the VPN server. The VPN server in turn relays the data to and from the destination host on the VPN. When the user wishes to connect to a host outside of the VPN, the device abandons the secure connection with the VPN and connects to the non-VPN host directly. If the user wishes to connect to a host within the VPN again, it must now go through the entire process of vatidation/authentication with the VPN server and AAA server.
The document US 2002/0097724 A1 concerns the processing of data packets within a network element cluster. This document discloses the establishment of a VPN session for secure communications over a public network by constructing encrypted data transmission channels.

What is needed is a solution that allows a user to connect to a network outside of the VPN while maintaining a VPN session and without encountering the DNS problems of prior art solutions.

### BRIEF DESCRIPTION OF THE INVENTION

A solution is provided wherein a VPN session may be suspended without termination. When a user wishes to connect to a host outside of the VPN, the device does not abandon the secure connection. Instead, it stores all the necessary network parameters associated with the secure VPN connections for later recall. When the user later wishes to connect to the VPN again, the device may then simply recall the necessary network parameters associated with the prior secure VPN connection, and begin data transfer with the VPN.

### BRIEF DESCRIPTION OF THE DRAWINGS

The accompanying drawings, which are incorporated into and constitute a part of this specification, illustrate one or more embodiments of the present invention and, together with the detailed description, serve to explain the principles and implementations of the invention.

In the drawings:
FIG. 1 is a timing diagram illustrating the typical scenario where the user requests a connection to a VPN.
FIG. 2 is a timing diagram illustrating an embodiment of the present invention.
FIG. 3 is a timing diagram illustrating another embodiment.
FIG. 4 is a flow diagram illustrating a method for managing a virtual private network session between a device and a VPN server in accordance with an embodiment of the present invention.
FIG. 5 is a flow diagram illustrating a method for managing a virtual private network session between a device and a first VPN server in accordance with another embodiment.
FIG. 6 is a block diagram illustrating an apparatus for managing a virtual private network session between a device and a VPN server in accordance with an embodiment of the present invention.
FIG. 7 is a block diagram illustrating an apparatus for managing a virtual private network session between a device and a first VPN server in accordance with another embodiment.

### DETAILED DESCRIPTION

Embodiments of the present invention are described herein in the context of a system of computers, servers, and software. Those of ordinary skill in the art will realize that the following detailed description of the present invention is illustrative only and is not intended to be in any way limiting. Other embodiments of the present invention will readily suggest themselves to such skilled persons having the benefit of this disclosure. Reference will now be made in detail to implementations of the present invention as illustrated in the accompanying drawings. The same reference indicators will be used throughout the drawings and the following detailed description to refer to the same or like parts.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

In accordance with the present invention, the components, process steps, and/or data structures may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein.

A solution is provided wherein a VPN session may be suspended without termination. When a user wishes to connect to a host outside of the VPN, the device does not abandon the secure connection. Instead, it stores all the necessary network parameters associated with the secure VPN connections for later recall. When the user later wishes to connect to the VPN again, the device may then simply recall the necessary network parameters associated with the prior secure VPN connection, and begin data transfer with the VPN.

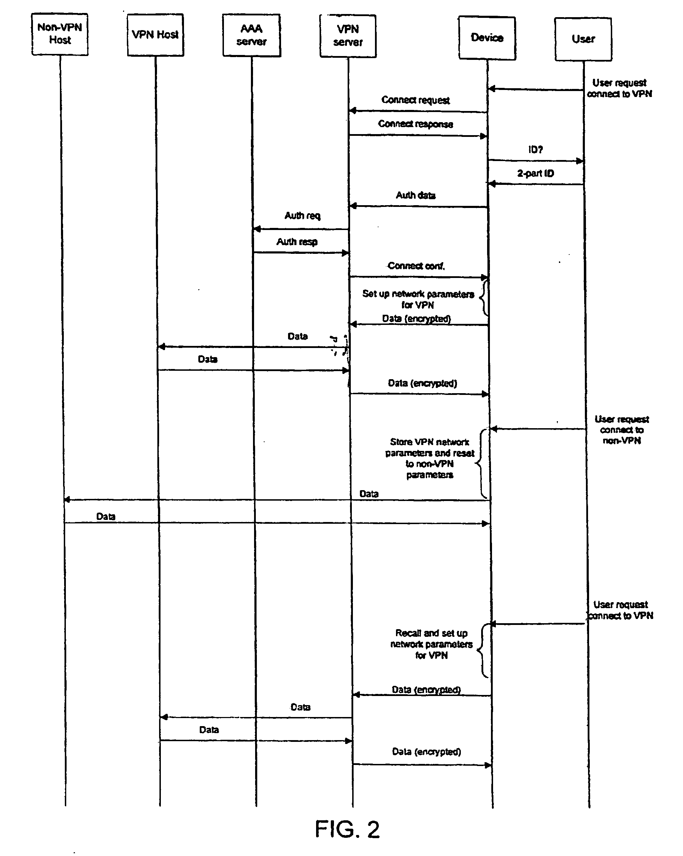

FIG. 2 is a timing diagram illustrating an embodiment of the present invention. As can be seen in this figure, not only is the reconnection achieved with fewer message exchanges between the device and the VPN server, there is also no need for the user to supply the authentication credentials again. The exchange of new authentication credentials requires the establishment of new encryption keys, which is processor intensive and can be demanding on small portable devices. Elimination of these steps, therefore, is quite beneficial.

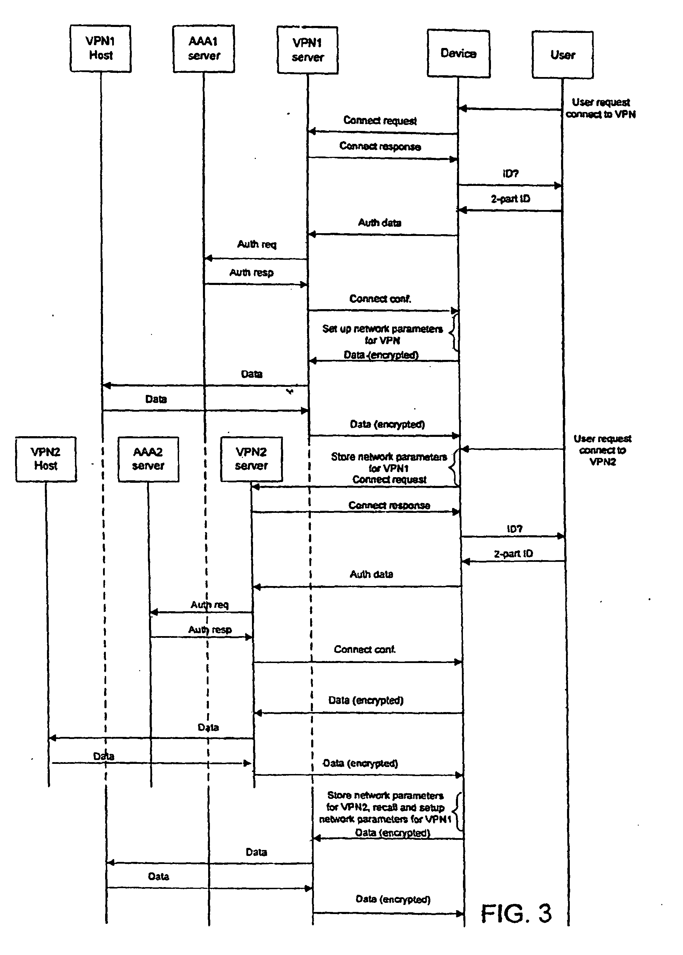

FIG. 3 is a timing diagram illustrating another embodiment. In this case, rather than the user desiring to connecting to a host outside of a VPN, the user actually wants to change the connection from one VPN to another VPN. In this case, the method allows storage and retrieval of multiple sets of network parameters, each associated with a specific VPN. The reconnection with each VPN is made efficient with the ability to recall I the necessary parameters. While this scenario may be a rare occurrence, this example illustrates the power and extensibility of the present invention.

The VPN parameters that need to be saved in these cases are only those parameters necessary to restart a VPN later. In a sense, the VPN parameters which are stored represent a "snapshot" of the established VPN. In one embodiment of the present invention, one of these parameters is a security association. The concepts of a security associate is fundamental to the IP Security Protocol (IPSec). A security association is a relationship between two or more entities that describes how the entities will use security services to communicate securely. IPSec provides many options for performing network encryption and authentication, Each IPSec connection can provide encryption, authentication, integrity, or all three services. When the security service is determined, the two IPSec peers must determine exactly which algorithms to use {e.g., MD5). After deciding on the algorithms, the two devices must share session keys. The security association is the method that IPSec uses to track all the particulars concerning a given IPSec communication session. It should be noted that while security associations are a key part of IPSec, security associations may apply to many different protocols. IPSec is merely one example of a secure access mechanism that is effective for the establishment of a VPN.

Each security association may comprise values such as destination address, a security parameter index, the IPSec transforms used for that session, security keys, and additional attributes such as IPSec lifetime.

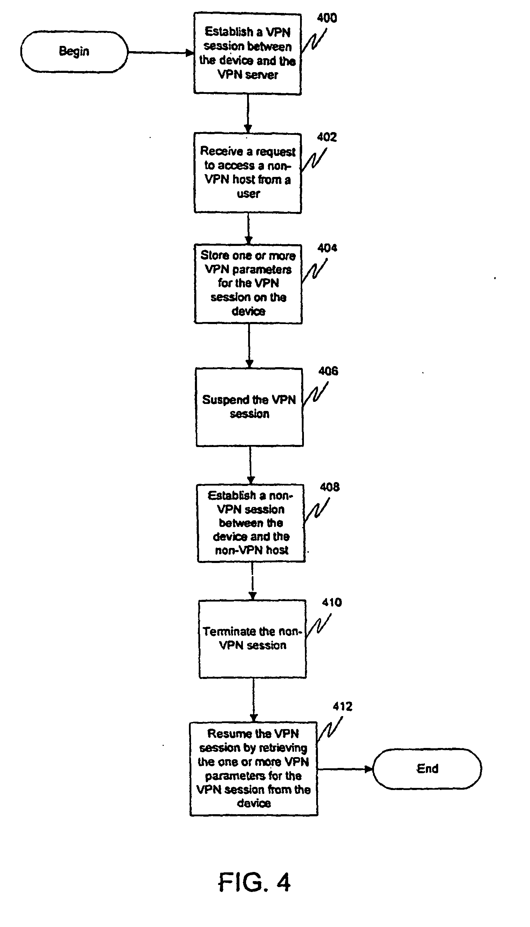

FIG. 4 is a flow diagram illustrating a method for managing a virtual private network session between a device and a VPN server in accordance with an embodiment of the present invention. The method may be performed at the device. Each act of the method may be performed in hardware, software, or any combination thereof. At 400, a VPN session may be established between the device and the VPN server. At 402, a request to access a non-VPN host may be received from a user. In response to this, at 404, one or more VPN parameters for the VPN session may be stored on the device. These parameters may include a security association, a domain name service (DNS) server address, an IP address of the device, a default gateway, and/or a DNS server list. At 406, the VPN session may be suspended. This may include preventing a user of the device from accessing the VPN session without informing the VPN server of such prevention.

At 408, a non-VPN session between the device and the non-VPN host may be established. Once the user has finished accessing the non-VPN host, at 410, the non-VPN session may be terminated. Then, at 412, the VPN session may be resumed by retrieving the one or more VPN parameters for the VPN session from the device. This may include once again allowing the user of the device to access the VPN session, without informing the VPN server of any change in the access rights of the user.

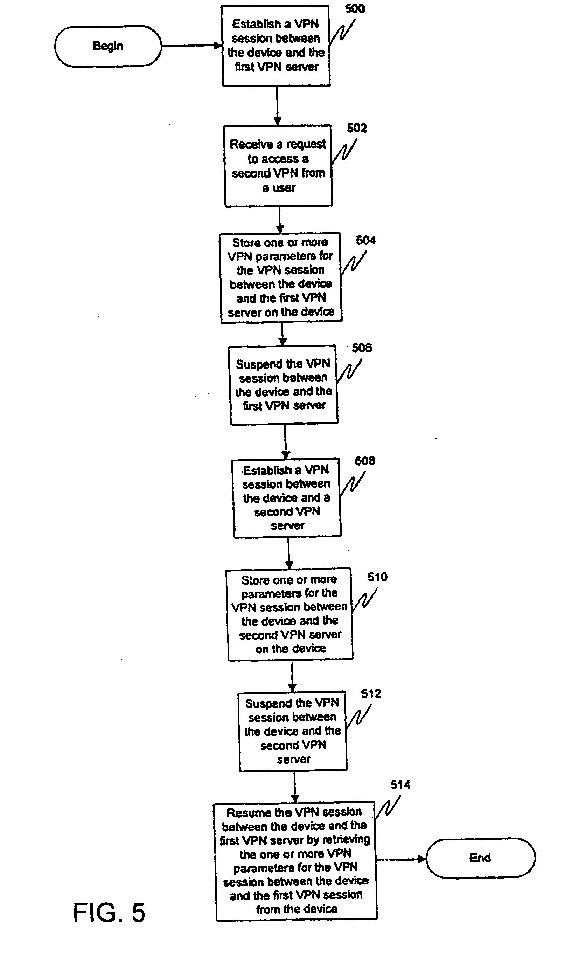

FIG. 5 is a flow diagram illustrating a method for managing a virtual private network session between a device and a first VPN server in accordance with another embodiment. The method may be performed at the device. Each act of the method may be performed in hardware, software, or any combination thereof. At 500, a VPN session may be established between the device and the first VPN server. At 502, a request to access a second VPN may be received from a user. In response to this, at 504, one or more VPN parameters for the VPN session between the device and the first VPN server may be stored on the device. These parameters may include a security association, a domain name service (DNS) server address, an IP address of the device, a default gateway, and/or a DNS server list. At 506, the VPN session between the device and the first VPN server may be suspended. This may include preventing a user of the device from accessing the VPN session between the device and the first VPN server without informing the first VPN server of such prevention.

At 508, a VPN session between the device and a second VPN server may be established. Once the user has finished accessing the second VPN, at 510, one or more parameters for the VPN session between the device and the second VPN server may be stored on the device. These parameters may include a security association, a domain name service (DNS) server address, an IP address of the device, a default gateway, and/or a DNS server list. Then, at 512, the VPN session between the device and the second VPN server may be suspended. This may include preventing a user of the device from accessing the VPN session between the device the second VPN server without informing the second VPN server of such prevention. Then, at 514, the VPN session between the device and the first VPN server may be resumed by retrieving the one or more VPN parameters for the VPN session between the device and the first VPN server from the device. This may include once again allowing the user of the device to access the VPN session, without informing the VPN server of any change in the access rights of the user.

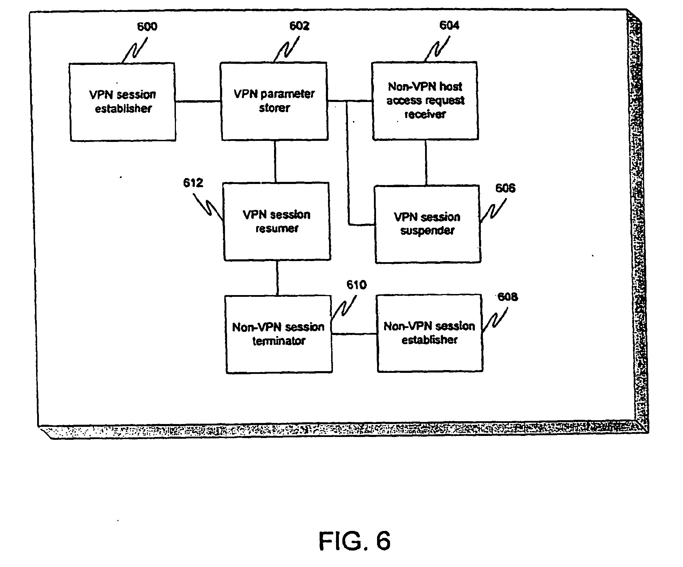

FIG. 6 is a block diagram illustrating an apparatus for managing a virtual private network session between a device and a VPN server in accordance with an embodiment of the present invention. The apparatus may be located at the device. Each element of the apparatus may be embodied in hardware, software, or any combination thereof. A VPN session establisher 600 may establish a VPN session between the device and the VPN server. A VPN parameter storer 602 coupled to the VPN session establisher 600 may store one or more VPN parameters for the VPN session on the device. These parameters may include a security association, a domain name service (DNS) server address, an IP address of the device, a default gateway, and/or a DNS server list. A non-VPN host access request receiver 604 may receive a request to access a non-VPN host from a user. In response to this, a VPN session suspender 606 coupled to the VPN parameter storer 602 and to the non-VPN host access request receiver 604 may suspend the VPN session. This may include preventing a user of the device from accessing the VPN session without informing the VPN server of such prevention.

A non-VPN session establisher 608 may establish a non-VPN session between the device and the non-VPN host. Once the user has finished accessing the non-VPN host, a non-VPN session terminator 610 coupled to said non-VPN session establisher 608 may terminate the non-VPN session. Then, a VPN session resumer 612 coupled to the VPN parameter storer 602 and to the non-VPN session terminator 610 may resume the VPN session by retrieving the one or more VPN parameters for the VPN session from the device. This may include once again allowing the user of the device to access the VPN session, without informing the VPN server of any change in the access rights of the user.

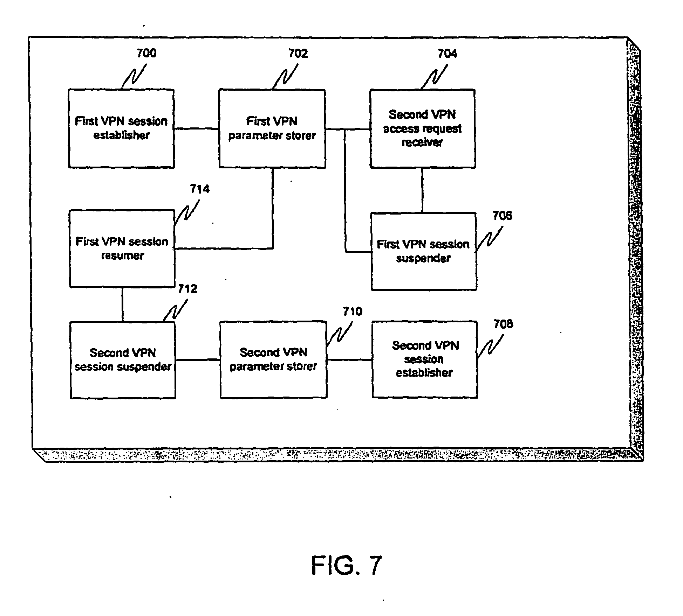

FIG. 7 is a block diagram illustrating an apparatus for managing a virtual private network session between a device and a first VPN server in accordance with another embodiment. The apparatus may be located on the device. Each element of the apparatus may be embodied in hardware, software, or any combination thereof. A first VPN session establisher 700 may establish a VPN session between the device and the first VPN server. A first VPN parameter storer 702 coupled to the first VPN session establisher 700 may store one or more VPN parameters for the VPN session between the device and the first VPN server on the device. These parameters may include a security association, a domain name service (DNS) server address, an IP address of the device, a default gateway, and/or a DNS server list. A second VPN access request receiver 704 may receive a request to access a second VPN from a user. In response to this, a first VPN session suspender 706 coupled to the first VPN parameter storer 702 and to the second VPN access request receiver 704 may suspend the VPN session between the device and the first VPN server. This may include preventing a user of the device from accessing the VPN session between the device and the first VPN server without informing the first VPN server of such prevention.

A second VPN session establisher 708 may establish a VPN session between the device and a second VPN server. Once the user has finished accessing the second VPN, a second VPN parameter storer 710 coupled to the second VPN session establisher 708 may store one or more parameters for the VPN session between the device and the second VPN server on the device. These parameters may include a security association, a domain name service (DNS) server address, an IP address of the device, a default gatevay, and/or a DNS server list. Then, a second VPN session suspender 712 coupled to the second VPN parameter storer 710 may suspend the VPN session between the device and the second VPN server. This may include preventing a user of the device from accessing the VPN session between the devices the second VPN server without informing the second VPN server of such prevention. Then, a first VPN session resumer 714 coupled to the first VPN parameter storer 702 and to the second VPN session suspender 712 may resume the VPN session between the device and the first VPN server by retrieving the one or more VPN parameters for the VPN session between the device and the first VPN server from the device. This may include once again allowing the user of the device to access the VPN session, without informing the VPN server of any change in the access rights of the user.

While embodiments and applications of this invention have been shown and described, it would be apparent to those skilled in the art having the benefit of this disclosure that many more modifications than mentioned above are possible without departing from the inventive concepts herein.

## Claims

1. A method comprising:
at a network device, establishing (400) a virtual private network VPN session between the device and a VPN server;
**characterized in that** the method comprises:
storing (404) one or more VPN parameters for the VPN session on the device; at the device, suspending (406) the VPN session, the suspending comprising preventing a user of the device from accessing the VPN session;
establishing (408) a non-VPN session between the device and a non-VPN host;
terminating (410) the non-VPN session;
at the device, resuming (412) the VPN session by retrieving the one or more VPN parameters for the VPN session from the device; and
while the VPN session is suspended, preventing the device from informing the VPN server of a change in rights of the user to access the VPN session.

2. The method of claim 1, wherein the one or more VPN parameters includes a security association.

3. The method of claim 2, wherein the one or more VPN parameters further includes at least one parameter selected from the group consisting of:
a domain name service (DNS) server address;
an IP address of the device;
a default gateway; and
a DNS server list.

4. A network device comprising:
means (600) for, at the network device, establishing a virtual private network (VPN) session between the device and a VPN server;
**characterized in that** the network device comprises:
means (602) for storing one or more VPN parameters for the VPN session on the device;
means (606) for, at the device, suspending the VPN session, the suspending comprising preventing a user of the device from accessing the VPN session;
means (608) for establishing a non-VPN session between the device and a non-VPN host;
means (610) for terminating the non-VPN session;
means (612) for, at the device, resuming the VPN session by retrieving the one or more VPN parameters for the VPN session from the device; and
means for, while the VPN session is suspended, preventing the device from informing the VPN server of a change in rights of the user to access the VPN session.

5. The network device of claim 4, wherein the one or more VPN parameters includes a security association.

6. The network device of claim 5, wherein the one or more VPN parameters further includes at least one parameter selected from the group consisting of:
a domain name service (DNS) server address;
an IP address of the device;
a default gateway; and
a DNS server list.

7. A program storage device readable by a machine, tangibly embodying a program of instructions executable by the machine to perform a method, the method comprising:
at a network device, establishing (400) a virtual private network (VPN) session between the device and a VPN server;
**characterized in that** the method comprises:
storing (404) one or more VPN parameters for the VPN session on the device;
at the device, suspending (406) the VPN session, the suspending comprising preventing a user of the device from accessing the VPN session;
establishing (408) a non-VPN session between the device and a non-VPN host;
terminating (410) the non-VPN session;
at the device, resuming (412) the VPN session by retrieving the one or more VPN parameters for the VPN session from the device; and
while the VPN session is suspended, preventing the device from informing the VPN server of a change in rights of the user to access the VPN session.

## Patentansprüche

1. Verfahren, umfassend:
bei einem Netzwerkgerät, Aufbauen (400) einer Virtuellen-privaten-Netz VPN-Sitzung zwischen dem Gerät und einem VPN-Server;
**dadurch gekennzeichnet, dass** das Verfahren umfasst:
Speichern (404) von einem oder mehreren VPN-Parametern für die VPN-Sitzung auf dem Gerät;
bei dem Gerät, Unterbrechen (406) der VPN-Sitzung, wobei das Unterbrechen Verhindern, dass ein Nutzer des Gerätes auf die VPN-Sitzung zugreift, umfasst;
Aufbauen (408) einer Nicht-VPN-Sitzung zwischen dem Gerät und einem Nicht-VPN-Host;
Beenden (410) der Nicht-VPN-Sitzung;
bei dem Gerät, Fortsetzen (412) der VPN-Sitzung durch Abrufen der ein oder mehreren VPN-Parametern für die VPN-Sitzung von dem Gerät; und
während der VPN-Sitzung unterbrochen ist, Verhindern, dass das Gerät den VPN-Server über eine Änderung in Rechten des Nutzers, um auf die VPN-Sitzung zuzugreifen, informiert.

2. Verfahren nach Anspruch 1, wobei die ein oder mehreren VPN-Parameter eine Sicherheitsverbindung enthalten.

3. Verfahren nach Anspruch 2, wobei die ein oder mehreren VPN-Parameter ferner wenigstens einen Parameter enthalten, der aus der Gruppe bestehend aus:
einer Domain-Name-Service (DNS)-Serveradresse;
einer IP-Adresse des Gerätes;
einem Default-Gateway; und
einer DNS-Serverliste
ausgewählt ist.

4. Netzwerkgerät, umfassend:
Mittel (600) zum Aufbauen einer Virtuellen-privaten-Netz (VPN)-Sitzung zwischen dem Gerät und einem VPN-Server bei dem Netzwerkgerät,;
**dadurch gekennzeichnet, dass** das Netzwerkgerät umfasst:
Mittel (602) zum Speichern von einem oder mehreren VPN-Parametern für die VPN-Sitzung auf dem Gerät;
Mittel (606) zum Unterbrechen der VPN-Sitzung bei dem Gerät, wobei das Unterbrechen Verhindern, dass ein Nutzer des Gerätes auf die VPN-Sitzung zugreift, umfasst;
Mittel (608) zum Aufbauen einer Nicht-VPN-Sitzung zwischen dem Gerät und einem Nicht-VPN-Host;
Mittel (610) zum Beenden der Nicht-VPN-Sitzung;
Mittel (612) zum Fortsetzen der VPN-Sitzung bei dem Gerät durch Abrufen der ein oder mehreren VPN-Parameter für die VPN-Sitzung von dem Gerät; und
Mittel zum Verhindern, dass das Gerät den VPN-Server über eine Änderung in Rechten des Nutzers, um auf die VPN-Sitzung zuzugreifen, informiert, während die VPN-Sitzung unterbrochen ist.

5. Netzwerkgerät nach Anspruch 4, wobei die ein oder mehreren VPN-Parameter eine Sicherheitsverbindung enthalten.

6. Netzwerkgerät nach Anspruch 5, wobei die ein oder mehreren VPN-Parameter ferner wenigstens einen Parameter enthalten, der aus einer Gruppe bestehend aus:
einer Domain-Name-Service (DNS)-Serveradresse;
einer IP-Adresse des Gerätes;
einem Default-Gateway; und
einer DNS-Serverliste
ausgewählt ist.

7. Programmspeichergerät, welches durch eine Maschine lesbar ist, das ein Programm von Anweisungen materiell verkörpert, die durch die Maschine derart ausführbar sind, das sie ein Verfahren durchführen, wobei das Verfahren umfasst:
bei einem Netzwerkgerät, Aufbauen (400) einer Virtuellen-privaten-Netz (VPN)-Sitzung zwischen dem Gerät und einem VPN-Server;
**dadurch gekennzeichnet, dass** das Verfahren umfasst:
Speichern (404) von einem oder mehreren VPN-Parametern für die VPN-Sitzung auf dem Gerät;
bei dem Gerät, Unterbrechen (406) der VPN-Sitzung, wobei das Unterbrechen Verhindern, dass ein Nutzer des Gerätes auf die VPN-Sitzung zugreift, umfasst;
Aufbauen (408) einer Nicht-VPN-Sitzung zwischen dem Gerät und einem Nicht-VPN-Host;
Beenden (410) der Nicht-VPN-Sitzung;
bei dem Gerät, Fortsetzen (412) der VPN-Sitzung durch Abrufen der ein oder mehreren VPN-Parametern für die VPN-Sitzung von dem Gerät; und
während der VPN-Sitzung unterbrochen ist, Verhindern, dass das Gerät den VPN-Server über eine Änderung in Rechten des Nutzers, um auf die VPN-Sitzung zuzugreifen, informiert.

## Revendications

1. Procédé comprenant :
au niveau d'un dispositif de réseau, l'établissement (400) d'une session de réseau privé virtuel VPN entre le dispositif et un serveur VPN ;
**caractérisé en ce que** le procédé comprend :
le stockage (404) d'un ou plusieurs paramètres VPN pour la session VPN sur le dispositif ;
au niveau du dispositif, la suspension (406) de la session VPN, la suspension comprenant le fait d'empêcher un utilisateur du dispositif d'accéder à la session VPN ;
l'établissement (408) d'une session non-VPN entre le dispositif et un hôte non-VPN ;
la terminaison (410) de la session non-VPN ;
au niveau du dispositif, la reprise (412) de la session VPN en récupérant le ou les paramètres VPN pour la session VPN à partir du dispositif ; et
pendant que la session VPN est suspendue, empêcher le dispositif d'informer le serveur VPN d'un changement des droits de l'utilisateur pour accéder à la session VPN.

2. Procédé selon la revendication 1, dans lequel le ou les paramètres VPN incluent une association de sécurité.

3. Procédé selon la revendication 2, dans lequel le ou les paramètres VPN incluent en outre au moins un paramètre choisi dans le groupe comprenant :
une adresse de serveur de service de noms de domaine (DNS) ;
une adresse IP du dispositif ;
une passerelle par défaut ; et
une liste de serveurs DNS.

4. Dispositif de réseau comprenant :
un moyen (600) pour, au niveau du dispositif de réseau, établir une session de réseau privé virtuel (VPN) entre le dispositif et un serveur VPN ;
**caractérisé en ce que** le dispositif de réseau comprend :
un moyen (602) pour stocker un ou plusieurs paramètres VPN pour la session VPN sur le dispositif ;
un moyen (606) pour, au niveau du dispositif, suspendre la session VPN, la suspension comprenant le fait d'empêcher un utilisateur du dispositif d'accéder à la session VPN ;
un moyen (608) pour établir une session non-VPN entre le dispositif et un hôte non-VPN ;
un moyen (610) pour terminer la session non-VPN ;
un moyen (612) pour, au niveau du dispositif, reprendre la session VPN en récupérant le ou les paramètres VPN pour la session VPN à partir du dispositif ; et
un moyen pour, pendant que la session VPN est suspendue, empêcher le dispositif d'informer le serveur VPN d'un changement des droits de l'utilisateur pour accéder à la session VPN.

5. Dispositif de réseau selon la revendication 4, dans lequel le ou les paramètres VPN incluent une association de sécurité.

6. Dispositif de réseau selon la revendication 5, dans lequel le ou les paramètres VPN incluent en outre au moins un paramètre choisi dans le groupe comprenant :
une adresse de serveur de service de noms de domaine (DNS) ;
une adresse IP du dispositif ;
une passerelle par défaut ; et
une liste de serveurs DNS.

7. Dispositif de stockage de programme lisible par une machine, incorporant tangiblement un programme d'instructions exécutable par la machine pour effectuer un procédé, le procédé comprenant :
au niveau d' un dispositif de réseau, l' établissement (400) d' une session de réseau privé virtuel (VPN) entre le dispositif et un serveur VPN ;
**caractérisé en ce que** le procédé comprend :
le stockage (404) d'un ou plusieurs paramètres VPN pour la session VPN sur le dispositif ;
au niveau du dispositif, la suspension (406) de la session VPN, la suspension comprenant le fait d'empêcher un utilisateur du dispositif d'accéder à la session VPN ;
l'établissement (408) d'une session non-VPN entre le dispositif et un hôte non-VPN ;
la terminaison (410) de la session non-VPN ;
au niveau du dispositif, la reprise (412) de la session VPN en récupérant le ou les paramètres VPN pour la session VPN à partir du dispositif ; et
pendant que la session VPN est suspendue, empêcher le dispositif d'informer le serveur VPN d'un changement des droits de l'utilisateur pour accéder à la session VPN.
